# EUROPEAN PATENT SPECIFICATION

(11) **EP 0 504 499 B1**
(45) Date of publication and mention of the grant of the patent: **08.11.1995**
(21) Application number: 91200591.5
(22) Date of filing: 18.03.1991
(51) Int. Cl.: B62B 3/02

(54) **Expandable mobile carriage and companion surface mounted tracksystem**
Ausbreitbarer Transportwagen und dazu passende Spuranordnung
Support mobile extensible et système apparenté de voie

(43) Date of publication of application: 23.09.1992
(73) Proprietor: STORIGHT MANUFACTURING LTD., Edmonton, Alberta T6E 5R9 (CA)
(72) Inventor: Cornell, Paul, Edmonton, Alberta T6J 6N4 (CA)
(74) Representative: van der Kloet-Dorleijn, Geertruida W.F., Drs.

(56) References cited:
- DE-A- 3 815 990
- DE-C- 135 279
- US-A- 1 634 341
- US-A- 2 774 609
- US-A- 5 005 848

## Description

### Background of the invention

This invention relates to a dolly, and in particular to a modular dolly for filing cabinets.

While the device of the present invention is identified hereinafter as a "dolly", it will be appreciated that the device can be permanently mounted under filing cabinets to render the latter mobile, i.e. the term "dolly" is intended to have its conventional meaning, or to identify a cart or trolley.

In general, dollies of the type proposed by applicant, i.e. flat dollies for supporting filing cabinets of appliances are solid structures of fixed dimensions. A search of the patent literature discloses dollies which can be assembled and disassembled. Examples of such dollies are found in United States Patents Nos. 2,774, 609, which issued to R.C. Winger on December 18, 1956 and 3,331,613, which issued to J.C. Popelka on July 18, 1967. The Winger structure is relatively complicated, utilizing sides with dovetailed grooves which would result in high production costs. The Popelka device is a lightweight structure for use in the household, and consequently would not be particuarly durable or suitable for heavy filing cabinets.

### Objects of the invention

The object of the present invention is to provide a relatively simple, yet strong, lightweight modular dolly which can be used to support one or more filing cabinets, and which can readily be expanded to accommodate larger units or groups of filing cabinets.

### Brief summary of the invention

Accordingly, the present invention relates to a modular dolly comprising substantially U-shaped, sideways opening bracket means adapted to define a corner of a frame when two or more such bracket means are interconnected with the open ends of the bracket opening away from and perpendicular to each other; wheel means rotatably mounted in one said bracket means for supporting the dolly; and elongated channel means extending between and connected to the bracket means to define the sides and ends of the dolly.

### Brief description of the drawings

The invention will be described in greater detail with reference to the accompanying drawing, which illustrates a preferred embodiment of the invention, and wherein:
Figure 1 is a shematic, perspective view from above of a portion of a dolly constructed in accordance with the present invention;
Figure 2 is a cross section of one corner of the dolly of figure 1;
Figure 3 is a cross section taken generally along line III-III of figure 2;
Figure 4 is a sectioned, perspective view of a channel element used in the dolly of figure 1;
Figure 5 is a perspective view from above of a corner retainer used in the dolly of figure 1, and
Figure 6 is a perspective view from above of a side retainer used in the dolly of figure 1.
Figure 7 is a cross-section of a junction of wheel-carrying brackets.
Figure 8 is a perspective view of a drift retarder screw to be used in the present straight mobile carriage.
Figure 9 is a perspective view of a surface mounted track, which can be placed onto a floor finish and extented to another one.
Figure 9a is a cross-section of the surface mounted track of fig. 9.

### Description of the preferred embodiment(s)

With reference to the drawings, the basis elements of the modular dolly of the present invention include U-shaped brackets generally indicated at 1 and 2, and channel elements 3 extending between side brackets 1 and 2.

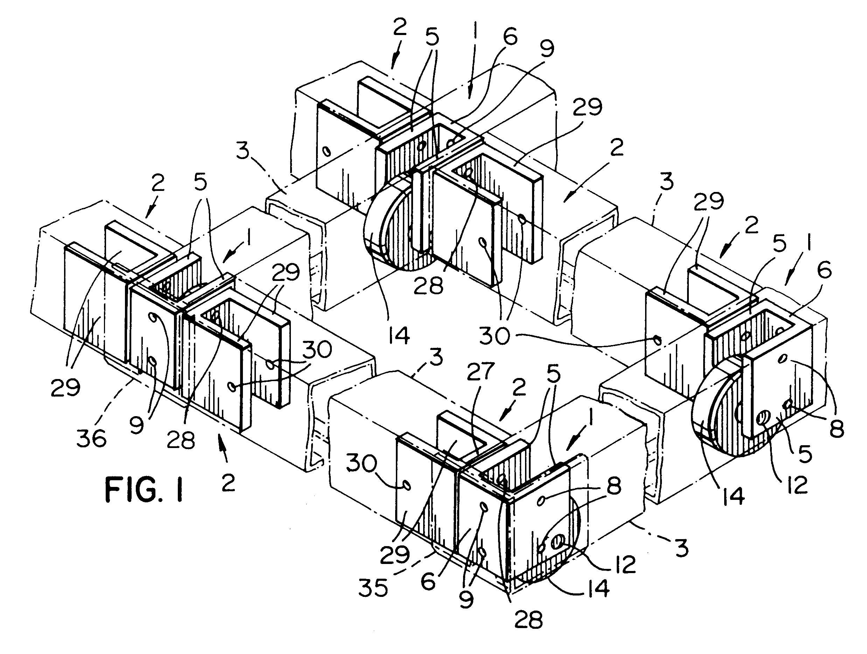

The bracket 1 is defined by a pair of parallel, spaced apart arms or sides 5, interconnected at one end by an end wall 6. Thus, the bracket 1 (like the bracket 2) is sideways opening, i.e. generally U-shaped when viewed from above or below, with a pair of rectangular sides 5 and one rectangular end 6. A pair of threaded openings 8 are provided in each side 5 for conncecting the brackets 1 to brackets 2, Similarly, a pair of vertically aligned threaded holes 9 are provided in the end 6 of the bracket 1 for connecting the bracket 1 end to-end to a similar bracket 1 or to a bracket 2. A pair of horizentally aligned opening 12 (Figure 1) are provided in the sides 5 for receiving a pin 13 which acts as an axle for a wheel 14. A bushing 17 and a bearing 18 are provided between the axle and the wheel 14.

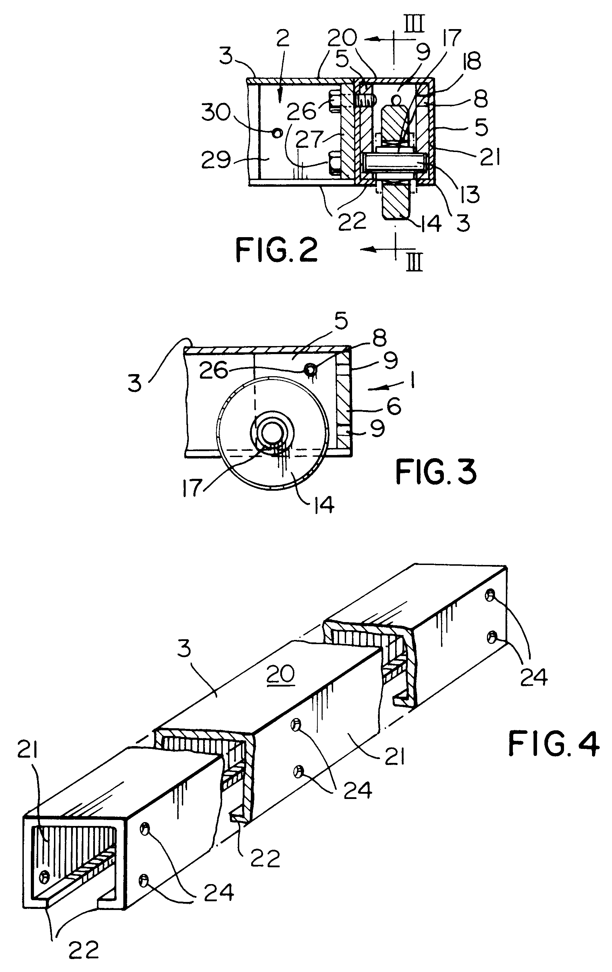

When assembling a dolly a carriage rail in the ferm of an inverted, C-Shaped channel element 3, is provided between two brackets 1. As best shown in Figure 4, the channel element 3 is defined by an elongated section of channel of C-shaped cross section including a top wall 20, side walls 21 and inwardly extending bottom ledges or flanges 22. Thus, the channel element 3 opens downwardly. A pair of vertically aligned holes 24 are provided in each side wall 21 of of the channel element 3 near each end and the center thereof. The holes 24 are threaded for receiving bolts 26 (Figure 2 and 3) for connecting the closed end 27 of a bracket 2 to the channel element 3 covering the bracket 1 and to the bracket 1 itself.

It will be appreciated from figure 1 that the channel elements 3 perpendicular to the brackets 1 do not have the same arrangement of holes 24 as the channel elements 3 extending between and overlapping the brackets 1. However except for the arrangement of the bolt receiving holes, all of the channel elements 3 are identical.

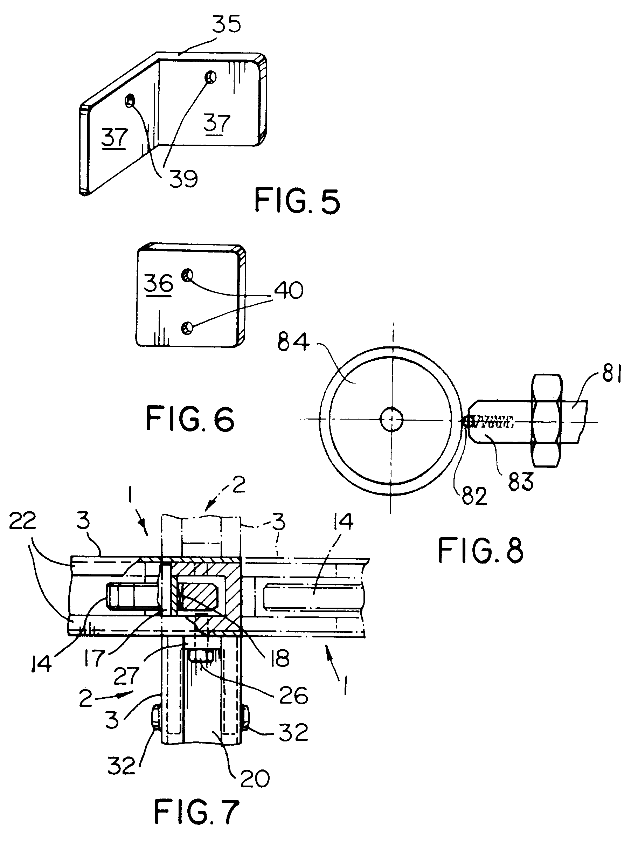

The bracket 2 has the same configuration as the bracket 1, including the end wall 27 with holes 28 (one shown - figure 1) for receiving the bolts 26, and side walls 29. The side walls 29 are provided with holes 30 for receiving holes 32 (figure 7) for conncecting a channel element 3 to the brackets 2.

When the brackets 1 and 2, and the channel elements 3 are assembled to define a rectangular dolly, the stability of the dolly is increased by means of corner and straight retaining plates 35 and 36, respectively (figure 1, 5 and 6, respectively). The corner plate 35 is merely an L-shaped plate, the arms 37 of which are sufficiently long to extend beyond the joints between the brackets 1 and 2 at corners of the dolly for preventing relative movement between such brackets 1 and 2. Each arm 37 of the plate 35 is provided with a hole 39 for receiving a bolt, which also extends into the uppermost hole 8 and 9 in the bracket 1 for mounting the retaining plat on the corner of the dolly. A pair of vertically aligned holes 40 are provided in the center of the straight retaining plate 36 for receiving bolts which extend into the holes 9 in the end of the bracket 1, when the bracket 1 is used between a pair of brackets 2 along one side of the dolly. As shown in figure 1, the ends of the plate 36 extend beyond the joint between the sides 5 of the bracket land sides 29 of the bracket 2 at the closed end 27 thereof for stabilising the dolly.

Due to the modular construction of the dolly according to the subject invention it will be appreciated that the dolly can be expanded bolt laterally and frontly in either direction to accommodate future expansion without the necessity of dismantling existing shelving and the cabinets that it supports.

With reference to figure 7, wheel-carrying brackets 1 can be interconnected end-to-end, with a pair of brackets 2 perpendicular thereto to define a cross-shaped reinforcing structure for use under central areas of filing cabinets or at junctions between abutting filing cabinets.

The basic elements of the dolly can be produced from a lightweight extruded aluminium alloy. The wheel is preferably formed of hard steel or of a relatively soft hub with a narrow annular rim of a hard steel.

Thus, there has been described relatively simple modular dolly which can readily be assembled and disassembled and which can be modified to support units of different dimensions.

An integral part of the straight mobile is the drift retarder screw (see fig. 8), having an adjustable nut (81), comprising an adjustable screw (82) o/w roll bearing end, for adjustment against wheel (84) (corresponding to wheel (14) fig. 1).

The function of said screw is to provide a zoned drift control for mobile carriage or dolly, eleminating the need to use shims; and a simple adjustment can be made by loosening (81) and slightly tightening or loosening adjustingscrew (82) against wheel (84).

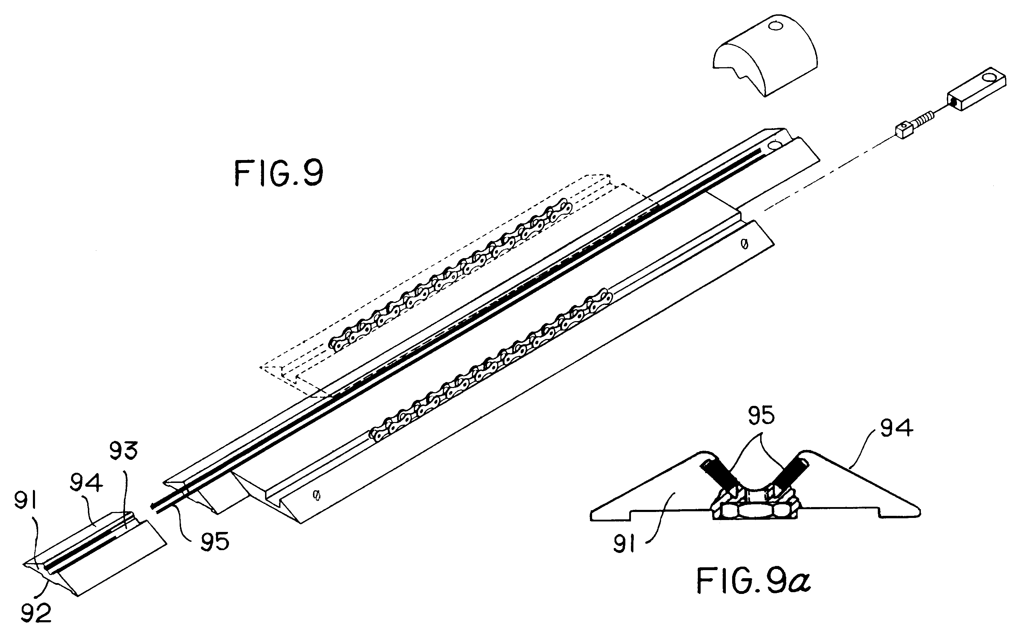

Also incorporated in the straight mobile carriage is the low profile track (see fig. 9).

Such a surface mounted track (91) can be placed onto any floor finish (92), the wheel being secured into space (93). The chamfert wheel shall run on two hardened steel inseats (95). The 45^{o} angle ensures minimal effort of moving the mobile carriage or dolly. The 30^{o} angle edges (94) of the track enables safe passover of people and or file carts. Track can be easily extended (95) by use of extended carbide angles as indicated.

## Claims

1. A modular dolly comprising substantially U-shaped, sideways opening bracket means adapted to define a corner of a frame when two or more such bracket means are interconnected with the open ends of the bracket means opening away from and perpendicular to each other; wheel means rotatably mounted in one said bracket means for supporting the dolly; and elongated channel means extending between and connected to the bracket means to define the sides and ends of the dolly.

2. A dolly according to claim 1 , wherein said channel means overlaps one said bracket means at each corner of the dolly, and a portion thereof is sandwiched between interconnected bracket means.

3. A dolly according to claim 2, wherein said channel means is C-shaped and downwardly opening in cross section.

4. A dolly according to claim 1, wherein said channel means includes a plurality of channel sections and said bracket means includes a first, wheel carrying bracket for telescopically receiving one end of said first channel section; and a second hollow bracket for telescopically receiving one end of a second channel section perpendicular to said first channel means, and first bolt means for connecting one closed end of said second bracket to one arm of said first channel section at said one end thereof and to said first bracket to form a secure unit.

5. A dolly according to claim 4, wherein said bracket means includes a third hollow bracket similar to said second hollow bracket for telescopically receiving one end of a third channel section, and second bolt means for connecting one closed end of a said third bracket to the other arm of said first channel section at said one end thereof in alignment with said second bracket.

6. A dolly according to claim 5, wherein said bracket means includes a fourth, wheel-carrying bracket similar to said first bracket for telescopically receiving one end of a fourth channel section, and third bolt means for connecting the closed end of said fourth bracket to the closed end of said first bracket to define a tandem wheel section of the dolly.

7. A dolly according to claim 4, including corner plat means for extending between one enter arm of said first and second brackets for stabilizing a corner of the dolly defined by said brackets.

8. A dolly according to claim 5, including side plate means for connection to the closed end of said first bracket in overlapping relationship with the outer aras of said second and third brackets to stabilized side of the dolly defined by said brackets.

9. A dolly according to one or more of the preceding claims, characterized in that said dolly is operated by using a companion surface mounted track.

## Patentansprüche

1. Modularer Rollbock, welcher aufweist: im wesentlichen U-förmige seitlich sich öffnende Trägereinrichtungen, welche so angepaßt sind, daß sie eine Ecke eines Rahmens definieren, wenn zwei oder mehr derartige Trägereinrichtungen untereinander so verbunden werden, daß die offenen Enden der Trägereinrichtungen sich weg voneinander und senkrecht zueinander öffnen; Radeinrichtungen, die drehbar in einer der Trägereinrichtungen zum Tragen des Rollbockes montiert sind; und längliche Kanaleinrichtungen, die sich zwischen die Trägereinrichtungen erstrecken und mit ihnen verbunden sind, um die Seiten und Enden des Rollbockes zu definieren.

2. Rollbock nach Anspruch 1, bei welchem die Kanaleinrichtungen eine der Trägereinrichtungen an jeder Ecke des Rollbockes überlappen und ein Abschnitt davon zwischen untereinander verbundenen Trägereinrichtungen angeordnet ist.

3. Rollbock nach Anspruch 2, bei welchem die Kanaleinrichtungen einen C-förmigen und sich nach unten öffnenden Querschnitt aufweisen.

4. Rollbock nach Anspruch 1, bei welchem die Kanaleinrichtungen eine Vielzahl von Kanalabschnitten aufweisen und die Trägereinrichtung aufweist: einen ersten, radtragenden Träger zum teleskopartigen Aufnehmen eines Endes des ersten Kanalabschnittes und einen zweiten hohlen Träger zum teleskopartigen Aufnehmen eines Endes eines zweiten Kanalabschnittes senkrecht zu dem ersten Kanalabschnitt, und eine erste Bolzeneinrichtung zum Verbinden eines geschlossenen Endes des zweiten Trägers mit einem Arm des ersten Kanalabschnittes an dessen einem Ende und mit dem ersten Träger, um eine feste Einheit zu bilden.

5. Rollbock nach Anspruch 4, bei welchem die Trägereinrichtung einen dritten hohlen Träger aufweist, der ähnlich dem zweiten hohlen Träger zum teleskopartigen Aufnehmen eines Endes eines dritten Kanalabschnittes ist, und eine zweite Bolzeneinrichtung zum Verbinden eines geschlossenen Endes des dritten Trägers mit dem anderen Arm des ersten Kanalabschnittes an dessen einem Ende in Ausrichtung mit dem zweiten Träger aufweist.

6. Rollbock nach Anspruch 5, bei welchem die Trägereinrichtung einen vierten radtragenden Träger ähnlich dem ersten Träger zum teleskopartigen Aufnehmen eines Endes eines vierten Kanalabschnittes und eine dritte Bolzeneinrichtung zum Verbinden des geschlossenen Endes des vierten Trägers mit dem geschlossenen Ende des ersten Trägers aufweist, um einen Tandemradabschnitt des Rollbockes zu definieren.

7. Rollbock nach Anspruch 4, welcher eine Eckenplatteneinrichtung zur Erstreckung zwischen einem Einfahrarm der ersten und der zweiten Träger zum Stabilisieren einer Ecke des Rollbockes aufweist, welcher durch die Träger definiert ist.

8. Rollbock nach Anspruch 5, welcher eine Seitenplatteneinrichtung zur Verbindung des geschlossenen Endes des ersten Trägers in überlappender Beziehung mit dem äußeren Bereich der zweiten und der dritten Träger an der stabilisierten Seite des Rollbockes aufweist, welcher durch die Träger definiert ist.

9. Rollbock nach einem oder mehreren der vorhergehenden Ansprüche, dadurch gekennzeichnet, daß der Rollbock durch Verwendung einer dazu passenden oberflächenmontierten Leitschiene betrieben wird.

## Revendications

1. Chariot modulaire comprenant des moyens d'éléments supports pratiquement en forme de U et s'ouvrant latéralement pour définir un coin d'un cadre lorsque deux ou plusieurs tels éléments supports sont raccordés entre eux avec leurs extrémités ouvertes orientées en sens inverse l'une de l'autre et perpendiculaires l'une à l'autre, des moyens de roues montés à rotation dans un tel élément support pour supporter le chariot et des moyens de profilés allongés s'étendant entre les éléments supports et raccordés à eux pour définir les côtés et les extrémités du chariot.

2. Chariot selon la revendication 1, dans lequel un élément profilé recouvre un élément support au niveau de chaque coin du chariot et dans lequel une portion de cet élément profilé est prise en sandwich entre des éléments supports raccordés entre eux.

3. Chariot selon la revendication 2, dans lequel l'élément profilé a une section transversale en forme de C s'ouvrant vers le bas.

4. Chariot selon la revendication 1, dans lequel les moyens de profilés comprennent une multiplicité d'éléments profilés et dans lequel les moyens de supports comprennent un premier élément support porteur de roues pour recevoir télescopiquement une extrémité d'un premier élément profilé, et un deuxième élément support creux pour recevoir télescopiquement une extrémité d'un deuxième élément profilé perpendiculaire au premier élément profilé, et des premiers moyens de vis pour raccorder une extrémité fermée du deuxième élément support à un bras du premier élément profilé au niveau de cette extrémité de l'élément support et au premier élément support pour former une unité stable.

5. Chariot selon la revendication 4, dans lequel les moyens de supports comprennent un troisième élément support creux semblable au deuxième élément support creux pour recevoir télescopiquement une extrémité d'un troisième élément profilé, et des seconds moyens de vis pour raccorder une extrémité fermée de ce troisième élément support à l'autre bras du premier élément profilé au niveau d'une extrémité de ce troisième élément support en alignement avec le deuxième élément support.

6. Chariot selon la revendication 5, dans lequel les moyens de supports comprennent un quatrième élément support porteur de roue semblable au premier élément support pour recevoir télescopiquement une extrémité d'un quatrième élément profilé, et des troisièmes moyens de vis pour raccorder l'extrémité fermée de ce quatrième élément support à l'extrémité fermée du premier élément support pour définir une section de roues tandem du chariot.

7. Chariot selon la revendication 4, comprenant des moyens de plaque de coin pour s'étendre entre un bras central des premier et deuxième éléments supports pour stabiliser un coin du chariot défini par ces éléments supports.

8. Chariot selon la revendication 5, comprenant des moyens de plaque latérale pour se raccorder à l'extrémité fermée du premier élément support en relation de recouvrement avec les zones extérieures des deuxième et troisième éléments supports pour stabiliser le côté du chariot défini par ces éléments supports.

9. Chariot selon une ou plusieurs des revendications précédentes, caractérisé en ce qu'il est mis en oeuvre en utilisant une voie montée sur une surface associée.
